(19) Europäisches Patentamt

European Patent Office

Office européen des brevets

(11) **EP 1 541 615 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(51) Int Cl.:
*C08G 77/388* (2006.01)     *C08G 77/26* (2006.01)
*C07F 7/18* (2006.01)

(21) Anmeldenummer: **04028584.3**

(22) Anmeldetag: **02.12.2004**

(54) **Verfahren zur Herstellung hochviskoser Organopolysiloxane**

Method for the production of highly viscous organopolysiloxanes

Procédé de préparation d'organopolysiloxanes à viscosité élevée

(84) Benannte Vertragsstaaten:
**BE DE FR GB NL PL**

(30) Priorität: **11.12.2003 DE 10358060**

(43) Veröffentlichungstag der Anmeldung:
**15.06.2005 Patentblatt 2005/24**

(73) Patentinhaber: **Wacker Chemie AG**
**81737 München (DE)**

(72) Erfinder:
• **Herzig, Christian, Dr.**
**83329 Waging (DE)**

• **Dormeier, Siegfried**
**94166 Stubenberg (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A- 1 905 101**     **DE-A- 2 500 020**

**Beschreibung**

Die Erfindung betrifft ein Verfahren zur Herstellung hochviskoser Organopolysiloxane. Weiterhin betrifft die Erfindung hochviskose Organopolysiloxane.

Zur Herstellung von Polysiloxanen mit hoher Viskosität existiert eine Reihe von Methoden, die hauptsächlich auf Kondensationsreaktionen beruhen. So werden silanolfunktionelle hochviskose Polysiloxane standardmäßig aus niedrigviskosen Hydrolysaten der Chlorsilane - meist Dimethyldichlorsilan - hergestellt, in dem diese unter Bildung von Wasser bei höherer Temperatur meist unter Mitwirkung saurer Katalysatoren kondensiert werden.

In ähnlicher Weise lassen sich silanolfunktionelle Polysiloxane mit Methoxysilanen unter Bildung von Methanol kondensieren. Hierzu sind meist höhere Temperaturen sowie Katalysatoren erforderlich, um technisch akzeptable Umsetzungsraten zu⁻ erreichen. So ist das Standardverfahren zur Herstellung von marktüblichen aminofunktionellen Siloxanen die basenkatalysierte Kondensation von Aminoalkyl-methoxysilanen mit einem kurzkettigen Hydrolysat von Dimethyldichlorsilan bei erhöhter Temperatur.

In Anbetracht der Umsetzungstemperaturen von 100°C und höher, sowie der Reaktionsdauer über mehrere Stunden ist ein Verfahren zur Herstellung hochviskoser Polysiloxane wünschenswert, welches entweder schneller beendet ist oder bei niedriger Temperatur, wie Raumtemperatur, abläuft.

In DE-A 2500020 ist ein Verfahren zur Herstellung von Aminosiloxanen beschrieben, bei dem silanolterminierte Polysiloxane mit α-Aminosilanen umgesetzt, die eine Alkoxygruppe tragen. Die Reaktion läuft bei moderaten Temperaturen unter Abspaltung von Alkohol ab. Allerdings können mit dieser Technik nur vergleichsweise instabile α-Aminosiloxane und auch nur in difunktioneller telecheler Form hergestellt werden.

Aus DE-A 1905101 sind Siloxanmodifizierte Carbamidsäurederivate bekannt, die durch Umsetzung eines aminomethylsubstituierten Polysiloxans mit einem Chlorameisensäureester erhalten werden können.

Hochviskose Polysiloxane sind auch durch Polyadditionsreaktionen zu erhalten, wie sie in US 5,241,034 und US 6,252,100 beschrieben sind. EP-A 874 017 und US 6,451,909 offenbaren Polyadditionsreaktionen in Emulsion zur Herstellung von hochviskosen Polysiloxanen. Allen diesen Polyadditionsmethoden ist jedoch gemein, dass zum Ablauf der Reaktionen Metallkatalysatoren benötigt werden, die oftmals nicht erwünscht sind. In Gegenwart von N-haltigen Sil(ox)anen treten außerdem noch Inhibierungseffekte auf, so dass eine gut katalysierte Polyaddition nur noch schlecht oder gar nicht mehr durchgeführt werden kann.

Es bestand daher die Aufgabe, ein Verfahren zur Herstellung hochviskoser Organopolysiloxane, die Si-C gebundene Reste mit basischem Stickstoff enthalten, bereitzustellen, bei dem die vorstehend genannten Nachteile vermieden werden und die unter moderaten thermischen Bedingungen hergestellt werden können. Weiterhin bestand die Aufgabe, hochviskose Organopolysiloxane bereitzustellen, die Si-C gebundene Reste mit basischem Stickstoff enthalten und die stabil sind. Die Aufgabe wird durch die Erfindung gelöst.

Gegenstand der Erfindung ist ein Verfahren zur Herstellung hochviskoser Organopolysiloxane, dadurch gekennzeichnet, dass Siloxane (1) aus Einheiten der allgemeinen Formel

$$A_a R_c (OR^1)_d SiO_{\frac{4-(a+c+d)}{2}} \qquad (I)$$

wobei

A      einen einwertigen, Si-C gebundenen Rest mit basischem Stickstoff bedeutet,

R      einen einwertigen, gegebenenfalls substituierten Kohlenwasserstoffrest mit 1 bis 18 Kohlenstoffatomen je Rest bedeutet,

$R^1$    ein Wasserstoffatom oder einen Alkylrest mit 1 bis 8 Kohlenstoffatomen, bevorzugt ein Wasserstoffatom oder einen Methyl- oder Ethylrest bedeutet,

a      0 oder 1,

c      0, 1, 2 oder 3 und

d      0 oder 1 ist,

mit der Maßgabe, dass die Summe $a+c+d \leq 3$ ist und durchschnittlich mindestens ein Rest A und mindestens ein Rest $R^1$ in der Bedeutung von $R^1$ gleich Wasserstoffatom je Molekül enthalten ist, und gegebenenfalls Siloxane (2) aus Einheiten der allgemeinen Formel

$$R_c(OR^1)_dSiO_{\frac{4-(c+d)}{2}} \qquad (II)$$

wobei R, $R^1$, c und d die oben dafür angegebene Bedeutung haben, mit der Maßgabe, dass die Summe c+d≤3 ist und mindestens ein Rest $R^1$ in der Bedeutung von $R^1$ gleich Wasserstoffatom je Molekül enthalten ist,
mit Silanen (3) der allgemeinen Formel

$$BR_eSi(OR^3)_{3-e} \qquad (III)$$

wobei

B     einen einwertigen Rest der Formel -$CR^2_2$-Y bedeutet,
$R^2$    ein Wasserstoffatom oder einen Alkylrest mit 1 bis 4 Kohlenstoffatomen, bevorzugt ein Wasserstoffatom bedeutet,
Y     ein monofunktioneller Rest aus der Gruppe der Halogene, der monosubstituierten Atome O und S und der substituierten Atome N und P bedeutet
$R^3$    einen Alkylrest mit 1 bis 8 Kohlenstoffatomen je Rest und
e     0, 1 oder 2, bevorzugt 0 oder 1 ist,

umgesetzt werden.
Gegenstand der Erfindung sind weiterhin hochviskose Organopolysiloxane aus Einheiten der allgemeinen Formel

$$A_aB_bR_c(OR^1)_dSiO_{\frac{4-(a+b+c+d)}{2}} \qquad (IV)$$

wobei A ein Rest der Formel

$$R^5_2N\text{-}(CHR^2)_n\text{-} \qquad (V),$$

ist, wobei $R^2$ die oben dafür angegebene Bedeutung hat und vorzugsweise ein Wasserstoffatom ist,
$R^5$ gleich oder verschieden ist und ein Wasserstoffatom oder einen Alkyl-, Cycloalkyl- oder Aminoalkylrest bedeutet und
n eine ganze Zahl von 2 bis 10 ist,
und B, R, $R^1$, a, c und d die oben dafür angegebene Bedeutung haben,
b 0 oder 1 ist,
mit der Maßgabe, dass die Summe a+b+c+d≤3 ist und a und b in derselben Siloxaneinheit nicht gleichzeitig 1 sind und dass durchschnittlich je Molekül mindestens ein Rest A und ein Rest B enthalten ist.
Die nach dem erfindungsgemäßen Verfahren erhaltenen hochviskosen Organopolysiloxane sind stabiler als die nach dem in DE 25 00 020 A beschriebenen Verfahren erhaltenen Organopolysiloxane, die instabil sind, da die Aminogruppen thermisch oder/und im sauren pH-Bereich leicht abgespalten werden, was in einem Sinken der Aminzahl (Die Aminzahl entspricht der Anzahl von ml 1N HCl, die zur Neutralisation von 1 g Substanz erforderlich ist.) zu beobachten ist.
Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.
Beispiele für substituierte Reste R sind Halogenalkylreste, wie der 3,3,3-Trifluor-n-propylrest, der 2,2,2',2',2'-Hexafluorisopropylrest, der Heptafluorisopropylrest und Halogenarylreste, wie der o-, m- und p-Chlorphenylrest.
Beispiele für Alkylreste $R^1$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.
Beispiele für Alkylreste $R^2$ sind der Methyl-, Ethyl-, n-Propyl-, iso-Propyl-, 1-n-Butyl-, 2-n-Butyl-, iso-Butyl- und tert.-Butylrest.

Beispiele für Alkylreste $R^1$ gelten im vollen Umfang für Alkylreste $R^3$.

Beispiele für Reste $R^5$ sind die für den Rest R angegebenen Beispiele für Alkylreste und Cycloalkylreste, sowie Aminoalkylreste, wobei von den Aminoalkylresten der Aminoethylrest bevorzugt ist.

Beispiele für Reste A sind 3-Aminopropyl, 3-Methylaminopropyl, 3-Dimethylaminopropyl, 3-Diethylaminopropyl, 3-Cyclohexylaminopropyl, 3-(2-Aminoethyl)aminopropyl, 3-(3-Aminopropyl)aminopropyl, 3-(3-Dimethylaminopropyl) aminopropyl, 3,3-bis(dimethylaminopropyl)aminopropyl sowie durch Umsetzung mit Carbonsäuren, wie Essigsäure teilacylierte und durch Umsetzung mit Lactonen, wie Butyrolacton oder Valerolacton teilamidierte Formen.

Beispiele für Reste Y sind

der Fluor-, Chlor-, Brom- oder Jodsubstituent,

die Gruppen -OH oder -OR$^4$

die Gruppen -SH oder -SR$^4$,

die Gruppen -NH$_2$, -NHR$^4$ oder -NR$^4_2$ und

die Gruppen -PR$^4_2$, -P(OR$^4$)$_2$, und -PO(OR$^4$)$_2$,

mit $R^4$ gleich einem einwertigen organischen, gegebenenfalls N-und/oder O-Atome enthaltenden Rest, vorzugsweise einen einwertigen, gegebenenfalls N- und/oder O-Atome enthaltenden Kohlenwasserstoffrest mit 1 bis 18 Kohlenstoffatomen.

Beispiele für Reste B sind Hydroxymethyl, Methoxymethyl, Ethoxymethyl, 2-Ethoxyethoxymethyl, 2-Butoxyethoxymethyl, Acetoxymethyl, Mercaptomethyl, Ethylthiomethyl, Dodecylthiomethyl, Aminomethyl, Methylaminomethyl, Dimethylaminomethyl, Diethylaminomethyl, Dibutylaminomethyl, Cyclohexylaminomethyl, Anilinomethyl, 3-Dimethylaminopropylaminomethyl, Bis(3-dimethylaminopropyl)aminomethyl, Diethylphosphinomethyl, Dibutylphosphinomethyl, sowie Gruppen der Formeln

-CH$_2$NHCOR$^4$, -CH$_2$NHCO$_2$R$^4$ oder -CH$_2$NHCONHR$^4$,

wobei $R^4$ die oben dafür angegebene Bedeutung hat.

Vorzugsweise ist B ein Rest der Formel -CH$_2$NHR$^4$ oder -CH$_2$NR$^4_2$, wobei $R^4$ die oben dafür angegebene Bedeutung hat.

Beispiele für Kohlenwasserstoffreste R gelten im vollen Umfang für Kohlenwasserstoffreste $R^4$.

Bevorzugt werden als Siloxane (1) solche der allgemeinen Formel

$$(R^1O)R_2SiO(SiR_2O)_n(SiRAO)_mSiR_2(OR^1) \qquad (VI)$$

wobei A, R und $R^1$ die oben dafür angegebene Bedeutung haben,

m eine ganze Zahl von 1 bis 30 ist und

n 0 oder eine ganze Zahl von 1 bis 1000 ist, eingesetzt.

Wenn Siloxane (2) mit verwendet werden, werden bevorzugt solche der allgemeinen Formel

$$(R^1O)R_2SiO(SiR_2O)_pSiR_2(OR^1) \qquad (VII)$$

wobei R und $R^1$ die oben dafür angegebene Bedeutung haben und

p eine ganze Zahl von 1 bis 1000 ist,

eingesetzt.

Beispiele für Siloxane (1) sind handelsübliche Aminöle mit z.B. 3-(2-Aminoethyl)aminopropylfunktionen, die Silanolgruppen enthalten.

Beispiele für gegebenenfalls mitverwendete Siloxane (2) sind handelsübliche Polydimethylsiloxane mit endständigen Silanolgruppen.

Diese Verbindungen sind sehr kostengünstig zugänglich, wodurch das erfindungsgemäße Verfahren wirtschaftlich besonders attraktiv ist.

Werden bei dem erfindungsgemäßen Verfahren Siloxane (2) mitverwendet, so werden sie vorzugsweise in Mengen von 0,01 bis 10 kg, bevorzugt 0,1 bis 5 kg, jeweils bezogen auf 1 kg Siloxan (1) eingesetzt.

Beispiele für Silane (3) sind

2-Butoxyethoxymethyltrimethoxysilan,

Methoxymethyl-methyldiethoxysilan,

Diethylaminomethylmethyldimethoxysilan,

Dibutylaminomethyltriethoxysilan,

Dibutylaminomethyltributoxysilan,

Cyclohexylaminomethyltrimethoxysilan,

Cyclohexylaminomethyltriethoxysilan,

Cyclohexylaminomethyl-methyldiethoxysilan,

Anilinomethyltriethoxysilan,
3-Dimethylaminopropyl-aminomethyltrimethoxysilan,
Acetylaminomethylmethyldimethoxysilan und
Ethylcarbamoylmethyltrimethoxysilan.

Bei dem erfindungsgemäßen Verfahren werden Silane (3) vorzugsweise in Mengen von 0,01 bis 10 Gew.-%, bevorzugt 0,1 bis 2,0 Gew.-%, jeweils bezogen auf Siloxan (1) und gegebenenfalls mitverwendetes Siloxan (2) eingesetzt.

Das erfindungsgemäße Verfahren wird vorzugsweise bei Temperaturen unter 100°C, bevorzugt bei 10°C bis 70°C, besonders bevorzugt bei 15°C bis 40°C, durchgeführt. Weiterhin wird das erfindungsgemäße Verfahren vorzugsweise beim Druck der umgebenden Atmosphäre durchgeführt, kann aber auch bei höheren oder niederen Drücken durchgeführt werden.

Die hochviskosen Organopolysiloxane weisen vorzugsweise Viskositäten von 1000 mPa.s bis 50.000.000 mPa.s bei 25°C, bevorzugt 10.000 mPa.s bis 10.000.000 mPa.s bei 25°C und besonders bevorzugt 50.000 mPa.s bis 5.000.000 mPa.s bei 25°C, auf.

Die Produkte können in "Bulk" hergestellt werden, jedoch empfiehlt sich aus Handhabungsgründen eine Verdünnung mit organischen Lösungsmitteln oder niedrig viskosen Oligomeren/Polymeren, bevorzugt mit Siloxanen, wie Dimethylpolysiloxanen.

Beispiele für organische Lösungsmittel sind Toluol, n-Hexan, n-Heptan, techn. Benzinfraktionen, Aceton, i-Propanol, Ethanol.

Die hochviskosen Organopolysiloxane können je nach Einsatz von Di- oder Trialkoxysilan (3) und linearem oder verzweigtem Siloxan (1) und gegebenenfalls (2) ebenfalls lineare, verzweigte oder sogar hochverzweigte Strukturen haben.

Im Normalfall läuft die Umsetzung von (1) und gegebenenfalls (2) mit (3) ohne Zusatz von Katalysatoren in wenigen Minuten bis mehreren Stunden vollständig ab, wobei auch hier Methoxysilane schneller als Ethoxysilane reagieren. Die Kondensation kann allerdings durch Säuren und Basen sowie durch Verbindungen des Aluminiums, Magnesiums, Titans, Zirkons, Wismuts, Zinks oder Zinns beschleunigt werden, falls dies erwünscht ist.

Beispiele für gegebenenfalls mitverwendete Katalysatoren (4) sind Butyltitanate und organische Zinnverbindungen, wie Di-n-butylzinndiacetat, Di-n-butylzinndilaurat, Dioctylzinndilaurat, Di-n-butylzinnoxid und Zinnoctoat.

Die bei dem erfindungsgemäßen Verfahren als Kondensationsnebenprodukte anfallenden Alkohole können im Produkt verbleiben oder auch entfernt werden, beispielsweise durch Destillation unter Vakuum oder durch Extraktion.

In den Beispielen werden folgende Edukte eingesetzt:

Aminöl A:

Copolymer aus Aminoethylaminopropylmethylsiloxy- und Dimethylsiloxyeinheiten mit einem Gehalt an terminalen OH-Gruppen von 630 Gew.-ppm und einer Viskosität von 4200 mm$^2$/s bei 25°C. Die Aminzahl beträgt 0,14.

Aminöl B:

Copolymer aus Aminoethylaminopropylmethylsiloxy- und Dimethylsiloxyeinheiten mit einem Gehalt an terminalen OH-Gruppen von 280 Gew.-ppm und einer Viskosität von 1100 mm$^2$/s bei 25°C. Die Aminzahl beträgt 0,30.

PDMS A:

Polydimethylsiloxandiol mit einem Gehalt an terminalen OH-Gruppen von 1130 Gew.-ppm.

PDMS B:

Polydimethylsiloxandiol mit einem Gehalt an terminalen OH-Gruppen von 770 Gew.-ppm.

Beispiel 1

200g Aminöl A (7,4 mequ. SiOH) werden bei 25°C mit 0,50g Aminomethylmethyldimethoxysilan (7,4 mequ. SiOMe) intensiv vermischt. Innerhalb von 8 Stunden bildet sich ein klares viskoses Öl mit einer Viskosität von 105 Pa·s (25°C). Der Methanolgehalt beträgt 0,118%.

Beispiel 2

Die Arbeitsweise von Beispiel 1 wird wiederholt mit der Abänderung, dass anstelle des difunktionellen Aminomethylmethyldimethoxysilans 0,37g des trifunktionellen Aminomethyltrimethoxysilans (7,4 mequ. SiOMe) eingesetzt wird. Man erhält nach 8 Stunden ein extrem strukturviskoses klares Öl mit mehr als 5000 Pa·s (25°C). Nach einer Temperung bei 24h/70°C ist das Öl unverändert und in Toluol problemlos klar löslich. Die Lösung ist frei von Gelanteilen.

Beispiel 3

Beispiel 2 wird mit der halben Menge (0,19g) Aminomethyltrimethoxysilan wiederholt. Nach 8 Stunden erhält man ein sehr strukturviskoses klares Öl mit einer Viskosität von ca. 900 Pa·s (25°C). Das Produkt ist in Toluol klar löslich und frei von Gelanteilen.

Beispiel 4

100g Aminöl A (3,7 mequ. SiOH) werden bei 25°C mit 0,41g Diethylaminomethylmethyldiethoxysilan (3,7 mequ. SiOEt) intensiv vermischt. Die langsam einsetzende Viskositätserhöhung erreicht nach 24 Stunden einen Wert von 50 Pa·s (25°C).

Beispiel 5

100g Aminöl A (3,7 mequ. SiOH) werden bei 25°C mit 0,34g Cyclohexylaminomethyltriethoxysilan homogen vermischt. Bereits nach wenigen Minuten steigt die Viskosität erheblich an. Nach 24 Stunden erhält man eine klare standfeste Masse, die in Toluol vollständig löslich ist.

Beispiel 6

100g Aminöl A (3,7 mequ. SiOH) werden bei 25°C mit nur 0,25g Cyclohexylaminomethyltriethoxysilan homogen vermischt. Auch mit der geringeren Menge an reaktivem Silan ist ein schneller Viskositätsanstieg sichtbar, wobei nach 24 Stunden aber nur 120 Pa·s (25°C) erreicht werden.

Beispiel 7

100g Aminöl B (1,65 mequ. SiOH) werden mit 45g PDMS A (3,0 mequ. SiOH) homogenisiert und danach mit 0,60g Cyclohexylaminomethylmethyldiethoxysilan (4,65 mequ. SiOEt) vermischt. Ein schneller Viskositätsanstieg führt nach 8 Stunden zu einem Produkt mit 52 Pa·s (25°C).

Beispiel 8

55g Aminöl A werden mit 45g PDMS B (jeweils 2,04 mequ. SiOH) homogenisiert. Zusätzlich werden 0,53g Cyclohexylaminomethylmethyldiethoxysilan (4,08 mequ. SiOEt) eingemischt. Das klare homogene Öl hat nach 24 Stunden eine Viskosität von 1050 Pa·s (25°C).

Beispiel 9

Beispiel 8 wird wiederholt mit der Abänderung, dass die beiden Siloxane, Aminöl A und PDMS B, vor der Zumischung des Silans mit 100g Siliconöl der Viskosität 35 mPa·s (25°C) verdünnt werden. Die 50%ige Aminöllösung erreicht nach 24 Stunden eine Viskosität von 20 000 mPa·s (25°C).

Beispiel 10

Das in Beispiel 7 hergestellte Produkt mit einer Viskosität von 52 Pa•s (25°C) hat eine Aminzahl von 0,321 (Equivalent von mit HCl titrierbarem basischem Stickstoff). 50g davon werden mit 0,96 g Eisessig vermischt und 24 h bei 70°C getempert. Danach wird die Aminzahl erneut gemessen. Ihr Wert beträgt dann 0,312. Mit 97,2% des Anfangswertes ist die Aminzahl nahezu unverändert.

Vergleichsversuch:

Gemäss DE 2500020 A werden aus 304,3g eines Siloxandiols der mittleren Formel $HO(Me_2SiO)_{82}H$ und 11,9 g Aminomethyldimethylmethoxysilan 316,2 g eines a, ω-Bis(aminomethyl)-polydimethylsiloxans hergestellt, das eine Aminzahl von 0,314 aufweist. Nach homogener Einmischung von 0,97 g Eisessig und Tempern bei 70°C über 24h wird ein Wert von nur noch 0,014 gemessen. Dies entspricht nur noch 4,5% des ursprünglichen Wertes. Im $^1$H-NMR-Spektrum sind nur noch Spuren der Aminomethylgruppe nachzuweisen.

**Patentansprüche**

1. Verfahren zur Herstellung hochviskoser Organopolysiloxane, **dadurch gekennzeichnet, dass** Siloxane (1) aus Einheiten der allgemeinen Formel

$$A_a R_c (OR^1)_d SiO_{\frac{4-(a+c+d)}{2}} \qquad (I)$$

wobei

A einen einwertigen, Si-C gebundenen Rest mit basischem Stickstoff bedeutet,
R einen einwertigen, gegebenenfalls substituierten Kohlenwasserstoffrest mit 1 bis 18 Kohlenstoffatomen je Rest bedeutet,
$R^1$ ein Wasserstoffatom oder einen Alkylrest mit 1 bis 8 Kohlenstoffatomen, bevorzugt ein Wasserstoffatom oder einen Methyl- oder Ethylrest bedeutet,
a 0 oder 1,
c 0, 1, 2 oder 3 und
d 0 oder 1 ist,

mit der Maßgabe, dass die Summe a+c+d ≤ 3 ist und dass durchschnittlich mindestens ein Rest A und mindestens ein Rest $R^1$ in der Bedeutung von $R^1$ gleich Wasserstoffatom je Molekül enthalten ist,
und gegebenenfalls Siloxane (2) aus Einheiten der allgemeinen Formel

$$R_c (OR^1)_d SiO_{\frac{4-(c+d)}{2}} \qquad (II)$$

wobei R, $R^1$, c und d die oben dafür angegebene Bedeutung haben, mit der Maßgabe, dass die Summe c+d ≤ 3 ist und mindestens ein Rest $R^1$ in der Bedeutung von $R^1$ gleich Wasserstoffatom je Molekül enthalten ist, mit Silanen (3) der allgemeinen Formel

$$BR_e Si(OR^3)_{3-e} \qquad (III)$$

wobei

B einen einwertigen Rest der Formel $-CR^2_2-Y$ bedeutet,
$R^2$ ein Wasserstoffatom oder einen Alkylrest mit 1 bis 4 Kohlenstoffatomen, bevorzugt ein Wasserstoffatom bedeutet,
Y ein monofunktioneller Rest aus der Gruppe der Halogene, der monosubstituierten Atome O und S und der substituierten Atome N und P bedeutet,
$R^3$ einen Alkylrest mit 1 bis 8 Kohlenstoffatomen je Rest und
e 0, 1 oder 2, bevorzugt 0 oder 1 ist,

umgesetzt werden.

2. Verfahren nach Anspruch 1, **dadurch gekennzeichnet, dass** der Rest A ein Rest der Formel

$$R^5_2 N- (CHR^2)_n- \qquad (V),$$

ist, wobei $R^2$ die in Anspruch 1 dafür angegebene Bedeutung hat und vorzugsweise ein Wasserstoffatom ist,
$R^5$ gleich oder verschieden ist und ein Wasserstoffatom oder einen Alkyl-, Cycloalkyl- oder Aminoalkylrest bedeutet und
n eine ganze Zahl von 2 bis 10 ist.

**3.** Verfahren nach Anspruch 1 oder 2, **dadurch gekennzeichnet, dass** der Rest A ein 3-(2-Aminoethyl)aminopropylrest ist.

**4.** Verfahren nach Anspruch 1, 2 oder 3, **dadurch gekennzeichnet, dass** der Rest A ein 3-Aminopropylrest ist.

**5.** Verfahren nach einem der Ansprüche 1 bis 4, **dadurch gekennzeichnet, dass** der Rest B ein Rest der Formel $-CH_2NHR^4$ oder $-CH_2NR^4{}_2$ ist, wobei $R^4$ einen einwertigen, gegebenenfalls N- und/oder O-Atome enthaltenden Kohlenwasserstoffrest mit 1 bis 18 Kohlenstoffatomen bedeutet.

**6.** Verfahren nach einem der Ansprüche 1 bis 5, **dadurch gekennzeichnet, dass** als Siloxane (1) solche der allgemeinen Formel

$$(R^1O)R_2SiO(SiR_2O)_n(SiRAO)_mSiR_2(OR^1) \qquad (VI)$$

wobei A, R und $R^1$ die in Anspruch 1 dafür angegebene Bedeutung haben,
m eine ganze Zahl von 1 bis 30 ist und
n 0 oder eine ganze Zahl von 1 bis 1000 ist,
eingesetzt werden.

**7.** Verfahren nach einem der Ansprüche 1 bis 6, **dadurch gekennzeichnet, dass** als Siloxane (2) solche der allgemeinen Formel

$$(R^1O) R_2SiO (SiR_2O)_pSiR_2(OR^1) \qquad (VII)$$

wobei R und $R^1$ die im Anspruch 1 dafür angegebene Bedeutung haben und
p eine ganze Zahl von 1 bis 1000 ist,
eingesetzt werden.

**8.** Hochviskose Organopolysiloxane aus Einheiten der allgemeinen Formel

$$A_aB_bR_c(OR^1)_dSiO_{\frac{4-(a+b+c+d)}{2}} \qquad (IV)$$

wobei A ein Rest der Formel

$$R^5{}_2N\text{-}(CHR^2)_n\text{-} \qquad (V),$$

ist, wobei $R^2$ die in Anspruch 1 dafür angegebene Bedeutung hat und vorzugsweise ein Wasserstoffatom ist,
$R^5$ gleich oder verschieden ist und ein Wasserstoffatom oder einen Alkyl-, Cycloalkyl- oder Aminoalkylrest bedeutet und
n eine ganze Zahl von 2 bis 10 ist,
und B, R, $R^1$, a, c und d die in Anspruch 1 dafür angegebene Bedeutung haben,
b 0 oder 1 ist,
mit der Maßgabe, dass die Summe $a+b+c+d \leq 3$ ist und a und b in derselben Einheit nicht gleichzeitig 1 sind und dass durchschnittlich je Molekül mindestens ein Rest A und ein
Rest B enthalten ist.

**9.** Hochviskose Organopolysiloxane nach Anspruch 8, **dadurch gekennzeichnet, dass** der Rest B ein Rest der Formel $-CH_2NHR^4$ oder $-CH_2NR^4{}_2$ ist, wobei $R^4$ einen einwertigen, gegebenenfalls N- und/oder O-Atome enthaltenden Kohlenwasserstoffrest mit 1 bis 18 Kohlenstoffatomen bedeutet.

**Claims**

1. Process for preparing highly viscous organopolysiloxanes, **characterized in that** siloxanes (1) composed of units of the general formula

$$A_a R_c (OR^1)_d SiO_{\frac{4-(a+c+d)}{2}} \qquad (I)$$

where

A is a monovalent, Si-C-bonded radical having basic nitrogen,
R is a monovalent, optionally substituted hydrocarbon radical having from 1 to 18 carbon atoms per radical,
$R^1$ is a hydrogen atom or an alkyl radical having from 1 to 8 carbon atoms, preferably a hydrogen atom or a methyl or ethyl radical,
a is 0 or 1,
c is 0, 1, 2 or 3 and
d is 0 or 1,

with the proviso that the sum of a+c+d is < 3 and that, on average, at least one A radical and at least one $R^1$ radical in the definition of $R^1$ as a hydrogen atom are present per molecule,
and optionally siloxanes (2) composed of units of the general formula

$$R_c (OR^1)_d SiO_{\frac{4-(c+d)}{2}} \qquad (II)$$

where R, $R^1$, c and d are each as defined above, with the proviso that the sum of c+d is $\leq$ 3 and at least one $R^1$ radical in the definition of $R^1$ as a hydrogen atom is present per molecule, are reacted with silanes (3) of the general formula

$$BR_e Si(OR^3)_{3-e} \qquad (III)$$

where

B is a monovalent radical of the formula -$CR^2_2$-Y,
$R^2$ is a hydrogen atom or an alkyl radical having from 1 to 4 carbon atoms, preferably a hydrogen atom,
Y is a monofunctional radical from the group of the halogens, the monosubstituted O and S atoms and the substituted N and P atoms,
$R^3$ is an alkyl radical having from 1 to 8 carbon atoms per radical and
e is 0, 1 or 2, preferably 0 or 1.

2. Process according to Claim 1, **characterized in that** the A radical is a radical of the formula

$$R^5_2 N\text{-}(CHR^2)_n\text{-} \qquad (V)$$

where $R^2$ is as defined in Claim 1 and is preferably a hydrogen atom,
$R^5$ is the same or different and is a hydrogen atom or an alkyl, cycloalkyl or aminoalkyl radical and
n is an integer from 2 to 10.

3. Process according to Claim 1 or 2, **characterized in that** the A radical is a 3-(2-aminoethyl)aminopropyl radical.

4. Process according to Claim 1, 2 or 3, **characterized in that** the A radical is a 3-aminopropyl radical.

5. Process according to one of Claims 1 to 4, **characterized in that** the B radical is a radical of the formula -$CH_2NHR^4$ or -$CH_2NR^4_2$, where $R^4$ is a monovalent hydrocarbon radical optionally containing nitrogen and/or oxygen atoms and having from 1 to 18 carbon atoms.

6. Process according to one of Claims 1 to 5, **characterized in that** the siloxanes (1) used are those of the general formula

$$(R^1O)R_2SiO(SiR_2O)_n(SiRAO)_mSiR_2(OR^1) \qquad (VI)$$

where A, R and $R^1$ are each as defined in Claim 1,
m is an integer from 1 to 30 and
n is 0 or an integer from 1 to 1000.

7. Process according to one of Claims 1 to 6, **characterized in that** the siloxanes (2) used are those of the general formula

$$(R^1O)R_2SiO(SiR_2O)_pSiR_2(OR^1) \qquad (VII)$$

where R and $R^1$ are each as defined in Claim 1 and
p is an integer from 1 to 1000.

8. Highly viscous organopolysiloxanes composed of units of the general formula

$$A_aB_bR_c(OR^1)_dSiO_{\frac{4-(a+b+c+d)}{2}} \qquad (IV)$$

where A is a radical of the formula

$$R^5{}_2N\text{-}(CHR^2)_n\text{-} \qquad (V)$$

where $R^2$ is as defined in Claim 1 and is preferably a hydrogen atom,
$R^5$ is the same or different and is a hydrogen atom or an alkyl, cycloalkyl or aminoalkyl radical and
n is an integer from 2 to 10,
and B, R, $R^1$, a, c and d are each as defined in Claim 1,
b is 0 or 1,
with the proviso that the sum of a+b+c+d is $\leq 3$ and a and b in the same unit are not simultaneously 1 and that, on average, at least one A radical and one B radical are present per molecule.

9. Highly viscous organopolysiloxanes according to Claim 8, **characterized in that** the B radical is a radical of the formula
$-CH_2NHR^4$ or $-CH_2NR^4{}_2$, where $R^4$ is a monovalent hydrocarbon radical optionally containing nitrogen and/or oxygen atoms and having from 1 to 18 carbon atoms.

**Revendications**

1. Procédé pour la préparation d'organopolysiloxanes hautement visqueux, **caractérisé en ce qu'**on transforme des siloxanes (1) constitués par des unités de formule générale

$$A_aR_c(OR^1)_dSiO_{\frac{4-(a+c+d)}{2}} \qquad (I)$$

dans laquelle
A signifie un radical monovalent, lié par Si-C avec de l'azote basique,
R signifie un radical hydrocarboné monovalent, le cas échéant substitué, comprenant 1 à 18 atomes de carbone par radical,
$R^1$ représente un atome d'hydrogène ou un radical alkyle comprenant 1 à 8 atomes de carbone, de préférence un atome d'hydrogène ou un radical méthyle ou éthyle,

a vaut 0 ou 1,

c vaut 0, 1, 2 ou 3 et

d vaut 0 ou 1,

à condition que la somme a+c+d ≤ 3 et qu'en moyenne au moins un radical A et au moins un radical $R^1$ ayant la signification de $R^1$ représentant un atome d'hydrogène soient contenus par molécule

et le cas échéant des siloxanes (2) constitués par des unités de formule générale

$$R_c(OR^1)_dSiO_{\frac{4-(c+d)}{2}} \qquad (II)$$

dans laquelle R, $R^1$, c et d ont la signification susmentionnée, à condition que la somme c+d ≤3 et qu'au moins un radical $R^1$ ayant la signification de $R^1$ représentant un atome d'hydrogène soit contenu par molécule,

avec des silanes (3) de formule générale

$$BR_eSi(OR^3)_{3-e} \qquad (III)$$

dans laquelle

B signifie un radical monovalent de formule $-CR^2_2-Y$,

$R^2$ signifie un atome d'hydrogène ou un radical alkyle comprenant 1 à 4 atomes de carbone, de préférence un atome d'hydrogène,

Y signifie un radical monofonctionnel du groupe des halogènes, des atomes monosubstitués O et S et des atomes substitués N et P,

$R^3$ signifie un radical alkyle comprenant 1 à 8 atomes de carbone par radical et

e vaut 0, 1 ou 2, de préférence 0 ou 1.

**2.** Procédé selon la revendication 1, **caractérisé en ce que** le radical A est un radical de formule

$$R^5_2N-(CHR^2)_n- \qquad (V),$$

dans laquelle $R^2$ a la signification indiquée dans la revendication 1 et représente de préférence un atome d'hydrogène, $R^5$ est identique ou différent et signifie un atome d'hydrogène ou un radical alkyle, cycloalkyle ou aminoalkyle et n vaut un nombre entier de 2 à 10.

**3.** Procédé selon la revendication 1 ou 2, **caractérisé en ce que** le radical A représente un radical 3-(2-aminoéthyl) aminopropyle.

**4.** Procédé selon la revendication 1, 2 ou 3, **caractérisé en ce que** le radical A représente un radical 3-aminopropyle.

**5.** Procédé selon l'une quelconque des revendications 1 à 4, **caractérisé en ce que** le radical B représente un radical de formule $-CH_2NHR^4$ ou $-CH_2NR^4_2$, $R^4$ signifiant un radical hydrocarboné monovalent, contenant le cas échéant des atomes N et/ou O, comprenant 1 à 18 atomes de carbone.

**6.** Procédé selon l'une quelconque des revendications 1 à 5, **caractérisé en ce qu'**on utilise comme siloxanes (1) ceux de formule générale

$$(R^1O)R_2SiO(SiR_2O)_n(SiRAO)_mSiR_2(OR^1) \qquad (VI)$$

dans laquelle A, R et $R^1$ ont la signification indiquée dans la revendication 1,

m vaut un nombre entier de 1 à 30 et

n vaut 0 ou un nombre entier de 1 à 1000.

**7.** Procédé selon l'une quelconque des revendications 1 à 6, **caractérisé en ce qu'**on utilise comme siloxanes (2) ceux de formule générale

$$(R^1O)R_2SiO(SiR_2O)_pSiR_2(OR^1) \qquad (VII)$$

dans laquelle R et $R^1$ ont la signification indiquée dans la revendication 1 et

p vaut un nombre entier de 1 à 1000.

**8.** Organopolysiloxanes hautement visqueux constitués par des unités de formule générale

$$A_aB_bR_c(OR^1)_dSiO_{\frac{4-(a+b+c+d)}{2}} \qquad (IV)$$

dans laquelle A est un radical de formule

$$R^5_2N-(CHR^2)_n- \qquad (V),$$

dans laquelle $R^2$ a la signification indiquée dans la revendication 1 et représente de préférence un atome d'hydrogène, $R^5$ est identique ou différent et signifie un atome d'hydrogène ou un radical alkyle, cycloalkyle ou aminoalkyle et n vaut un nombre entier de 2 à 10,
et B, R, $R^1$, a, c et d ont la signification indiquée dans la revendication 1,
b vaut 0 ou 1,
à condition que la somme a+b+c+d ≤ 3 et que a et b dans la même unité ne valent pas simultanément 1 et qu'en moyenne au moins un radical A et un radical B soient contenus par molécule.

**9.** Organopolysiloxanes hautement visqueux selon la revendication 8, **caractérisés en ce que** le radical B représente un radical de formule -CH$_2$NHR$^4$ ou -CH$_2$NR$^4_2$, dans laquelle $R^4$ représente un radical hydrocarboné monovalent, contenant le cas échéant des atomes N et/ou O, comprenant 1 à 18 atomes de carbone.